# EUROPÄISCHE PATENTSCHRIFT

(11) **EP 0 822 205 B1**
(45) Veröffentlichungstag und Bekanntmachung des Hinweises auf die Patenterteilung: **13.10.1999**
(21) Anmeldenummer: 97113339.2
(22) Anmeldetag: 01.08.1997
(51) Int. Cl.: C08F 12/04, B01J 19/20, B01J 19/24

(54) **Verfahren zur Herstellung von teilkristallinen syndiotaktischen Polymerisaten aus vinylaromatischen Monomeren**
Process for the preparation of partially crystalline syndiotactic polymers from vinylaromatic monomers
Procédé pour la préparation de polymères partiellement cristallins syndiotactiques à partir de monomères vinylaromatiques

(30) Priorität: 02.08.1996 DE 19631365
(43) Veröffentlichungstag der Anmeldung: 04.02.1998
(73) Patentinhaber: BASF AKTIENGESELLSCHAFT, 67056 Ludwigshafen (DE)
(72) Erfinder: Wünsch, Josef, Dr., 67105 Schifferstadt (DE); Schiessl, Michael, 67454 Hassloch (DE); Diener, Ralph, Dr., 67157 Wachenheim (DE)
(74) Vertreter: Isenbruck, Günter, Dr.

(56) Entgegenhaltungen:
- DE-A- 19 506 554
- US-A- 5 484 862

## Beschreibung

Die Erfindung betrifft ein Verfahren zur Herstellung von im wesentlichen syndiotaktischen und teilkristallinen Polymerisaten, die vinylaromatische Monomere beinhalten, aus einer Reaktionsmischung enthaltend als Komponente vinylaromatische Verbindungen, Metallocen-Komplexe als Katalysatoren und einen oder mehrere Co-Katalysatoren ausgewählt aus der Gruppe der starken, neutralen Lewis-Säuren, der ionischen Verbindungen mit lewissauren Kationen und der ionischen Verbindungen mit Brönsted-Säuren als Kationen, dadurch gekennzeichnet, daß die Komponenten vor dem Eintritt in einen Polymerisationsreaktor vorvermischt werden.

Weiterhin betrifft die Erfindung eine für ein solches Verfahren geeignete Vorrichtung. Ferner betrifft die vorliegende Erfindung die Verwendung der durch dieses Verfahren erhältlichen Polymerisate für Formkörper, Folien, Fasern und Beschichtungen.

Polymerisate von vinylaromatischen Verbindungen, insbesondere Polystyrol, finden aufgrund ihres Eigenschaftsprofils in vielen Bereichen Verwendung, beispielsweise als Verpackungsmaterial oder als Überzüge für Metalle oder Kunststoffe, vorzugsweise bei elektrischen Anwendungen, aber auch als thermoplastische Formmassen für Spritzgußanwendungen.

Aus EP 379 128 ist ein Verfahren zur Herstellung eines auf Styrol basierenden Polymers mit hoher syndiotaktischer Konfiguration bekannt, das durch das Hintereinanderschalten verschiedener speziell ausgelegter Reaktoren Ausbeute und Syndiotaktizität zu steigern versucht. Jedoch wird durch dieses Verfahren trotz aufwendigster Reaktortechnik nur eine Syndiotaktizität von maximal 97% bei einer maximalen Ausbeute von 80% erreicht.

EP 584 646 offenbart ein Verfahren zur Herstellung syndiotaktischer styrolhaltiger Polymere, indem in einem Reaktor ein Katalysator oder ein Katalysator und ein Ausgangsmonomer in mindestens zwei Bereichen des Reaktors entlang der Reaktorachse zugegeben wird. Dieses Verfahren erreicht jedoch trotz des Mehrfachdosierens lediglich eine maximale Syndiotaktizität von 98,4% bei einem Umsatz von weniger als 50%.

Die Aufgabe der vorliegenden Erfindung bestand darin, ein Verfahren zur Herstellung von teilkristallinen, im wesentlichen syndiotaktischen Polymerisaten aus vinylaromatischen Verbindungen zur Verfügung zu stellen, die zu einem Polymer mit hoher Syndiotaktizität bei hoher Ausbeute führen und verfahrenstechnisch weniger aufwendig sind.

Überraschend wurde gefunden, daß die erfindungsgemäße Aufgabe durch das Verfahren gemäß Anspruch 1 gelöst wird.

Weiterhin wurde die Verwendung der hierbei erhältlichen Polymerisate zur Herstellung von Formkörpern, Folien und Fasern gefunden.

Die erfindungsgemäße Vorrichtung führt durch das Vorvermischen zu einer deutlich besseren Homogenisierung der Polymerisationsmischung vor der Polymerisation. Dies hat zur Folge, daß auf Grund der Gleichmäßigkeit der Polymerisationsmischung während der Polymerisation im Reaktor weniger thermische Schwankungen auftreten und somit die Steuerung des erfindungsgemäßen Verfahrens gegenüber den aus dem Stand der Technik bekannten deutlich vereinfacht wird. Die erfindungsgemäße Vorvermischung hat ferner den Vorteil, daß eine kürzere Reaktionszone benötigt wird, die temperiert werden muß.

Ein weiterer Vorteil des erfindungsgemäßen Verfahrens liegt in der schonenden Aktivierung des Katalysators durch die Vorvermischung von Katalysator und Co-Katalysatoren bei Raumtemperatur in dem vorgeschalteten Mischer. Die schonende Aktivierung des Katalysators wirkt sich gleichfalls positiv auf die Homogenität der Polymerisationsmischung aus. Aufgrund des während des Vorvermischens aktivierten Katalysators setzt die Reaktion im Reaktor sofort ein und verläuft wesentlich gleichmäßiger im Vergleich zu dem Fall, in dem die Aktivierung des Katalysators erst innerhalb des Reaktors erfolgt. Diese Aktivierung führt gleichfalls zu einer leichteren Steuerung der Polymerisation im Reaktor. Ferner erlaubt die Aktivierung des Katalysators während des Vorvermischens, im Vergleich zum Stand der Technik mehr Monomer pro Katalysatormenge umzusetzen und eine engere Molekulargewichtsverteilung zu erreichen.

Ferner ist durch das erfindungsgemäße Vorvermischen der Aufwand an Rühr- und Knetenergie während der Reaktion geringer. Dies ist insbesondere der Fall, wenn ein statischer Mischer eingesetzt wird, da in diesem die Durchmischung während des Durchströmens der Polymerisationsmischung erfolgt. Besonders vorteilhaft ist das erfindungsgemäße Verfahren dann, wenn ein statischer Mischer so angeordnet wird, daß die Vorvermischung der Polymerisationsmischung durch Schwerkraft erfolgt.

Ein weiterer Vorteil des erfindungsgemäßen Verfahrens liegt darin, daß insbesondere durch die schonende Aktivierung des Katalysators und durch die gute Homogenisierung der Polymerisationsmischung ein Nachdosieren des Katalysators zur Durchführung der Polymerisationsreaktion mit hohen Ausbeuten bei hoher Syndiotaktizität nicht erforderlich ist.

Als vinylaromatische Verbindungen eignen sich besonders Verbindungen der allgemeinen Formel I 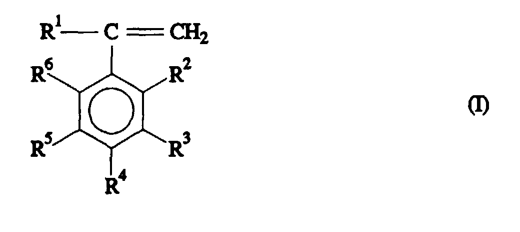 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel I eingesetzt, in denen
- R¹: Wasserstoff bedeutet
und
- R² bis R⁶: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Bei den erfindungsgemäßen Verfahren werden als Metallocenkomplexe vorzugsweise solche der allgemeinen Formel II 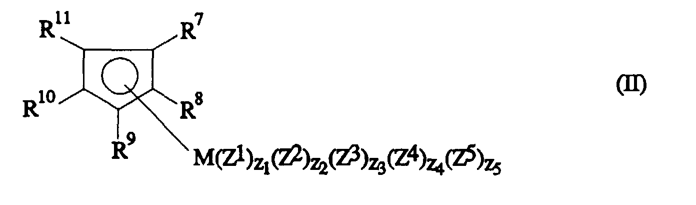 in der die Substituenten und Indices folgende Bedeutung haben:
- R⁷ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- Z¹ bis Z⁵: Wasserstoff, Halogen, C₁- bis C₁₀-Alkyl, C₆- bis C₁₅-Aryl, C₁- bis C₁₀-Alkoxy oder C₁- bis C₁₅-Aryloxy
und
- z₁ bis z₅: 0, 1, 2, 3, 4 oder 5, wobei die Summe z₁+z₂+z₃+z₄+z₅ der Wertigkeit von M abzüglich der Zahl 1 entspricht,
eingesetzt.

Besonders bevorzugte Metallocenkomplexe der allgemeinen Formel II sind solche, in denen
- M: für ein Metall der IV. Nebengruppe des Periodensystems der Elemente steht, insbesondere für Titan
und
- Z¹ bis Z⁵: C₁- bis C₁₀-Alkyl, C₁- bis C₁₀-Alkoxy oder Halogen bedeuten.

Beispiele für solche bevorzugten Metallocenkomplexe sind:
Indenyltitantrichlorid,
Indenyltitantrimethylat,
Indenyltitantrimethyl,
Pentamethylcyclopentadienyltitantrichlorid,
Pentamethylcyclopentadienyltitantrimethyl und
Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch eingesetzt werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Co-Katalysator wird eine Koordinationskomplexverbindung, ausgewählt aus der Gruppe der starken, neutralen Lewissäuren, der ionischen Verbindungen mit lewissauren Kationen und der ionische Verbindungen mit Brönsted-Säuren als Kation eingesetzt.

Als starke, neutrale Lewissäuren sind Verbindungen der allgemeinen Formel III

M¹X¹X²X³ (III)

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel III, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel IV

[(A^{a+})Q₁Q₂...Q_{z}]^{d+} (IV)

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atomen im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat und besonders bevorzugt deren Dimethylaluminiumsalze.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Die Metallocenkomplexe können geträgert eingesetzt werden, vorzugsweise werden sie jedoch ungeträgert verwendet.

Geeignete Trägermaterialien sind beispielsweise Kieselgele, bevorzugt solche der Formel SiO₂· bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200µm auf, insbesondere 30 bis 80µm. Derartige Produkte sind im Handel erhältlich, z.B. als Silica-Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, bevorzugt syndiotaktisches Polystyrol, Polybutadien, Polycarbonate oder deren Copolymere.

Zusätzlich können bei der Polymerisation noch Aluminiumalkyle sowie deren Hydride verwendet werden. Hierbei sind Trimethylaluminium, Triethylaluminium, Tri-iso-propylaluminium, Tri-n-propylaluminium, Tri-iso-butylaluminium und Tri-n-butylaluminium besonders geeignet, insbesondere jedoch Tri-iso-butylaluminium.

Erfindungsgemäß bevorzugte Dialkylaluminiumhydride sind Dimethylaluminiumhydrid, Diethylaluminiumhydrid, Di-iso-propylaluminiumhydrid, Di-n-propylaluminiumhydrid, Di-iso-butylaluminiumhydrid und Di-n-butylaluminiumhydrid, wobei Di-iso-butylaluminiumhydrid und Di-n-butylaluminiumhydrid besonders bevorzugt sind.

Es hat sich als vorteilhaft erwiesen, wenn das Mol-Verhältnis von der vinylaromatischen Verbindung zum Co-Katalysator im Bereich von 10¹:1 bis 10⁷:1, vorzugsweise im Bereich von 10²:1 bis 10⁶:1 und besonders bevorzugt im Bereich von 10³:1 bis 10⁵:1 liegt. Das Mol-Verhältnis von Co-Katalysator zum Metallocenkomplex liegt vorzugsweise im Bereich von 10⁻²:1 bis 10⁷:1, insbesondere im Bereich von 10²:1 bis 10⁵:1.

Das Mol-Verhältnis von der vinylaromatischen Verbindung zu den aliphatischen C₁- bis C₄-Kohlenwasserstoffen liegt vorzugsweise im Bereich von 5:1 bis 10⁴:1, insbesondere im Bereich von 10:1 bis 10³:1.

Wenn ein Aluminiumalkyl eingesetzt wird, hat sich ein Mol-Verhältnis von Aluminiumalkyl zum Metallocen-Komplex von 10.000:1 bis 1:1, bevorzugt von 1.000:1 bis 1:1 und besonders bevorzugt von 1.000:1 bis 10:1 als besonders geeignet erwiesen.

Das Mol-Verhältnis von Katalysator zu Alkylaluminoxan beträgt von 1:10 bis 1:10.000, bevorzugt jedoch von 1:20 bis 1:9.000. Das Mol-Verhältnis von Alkylaluminoxan zu Trialkylaluminium beträgt von 1:0,001 bis 1: 10.000, bevorzugt jedoch von 1:0,01 bis 1:5.000. Das Mol-Verhältnis von Katalysator zu vinylaromatischem Monomer beträgt 1:1.000 bis 1:10.000.000, bevorzugt jedoch 1:2.000 bis 1:1.000.000.

Geeignete Polymerisationstemperaturen liegen im Bereich von 0 bis 150, bevorzugt von 10 bis 100 und besonders bevorzugt von 40 bis 80 °C. Die Polymerisationszeiten können im Bereich von 0,1 bis 24, bevorzugt 0,5 bis 12 und besonders bevorzugt 1 bis 6 h, liegen.

Das erfindungsgemäße Verfahren kann in allen unpolaren und aprotisch polaren Lösungsmitteln, bevorzugt jedoch im Monomeren oder in Monomermischungen als Lösungmittel und besonders bevorzugt in Substanz, erfolgen. Im erfindungsgemäßen Verfahren hat es sich als vorteilhaft erwiesen, den Katalysator in eine Benzinfraktion, beispielsweise Petrolether, Hexan, Pentan, Benzol, Toluol, Ethylbenzol, Xylol oder Styrol zu verwenden. Das erfindungsgemäße Verfahren kann im Unterdruck, Normaldruck und Überdruck durchgeführt werden. Es ist bevorzugt, das erfindungsgemäße Verfahren unter Normaldruck, unter dem Druck, der aus der Flüssigkeitssäule der Polymerisationsmischung resultiert oder durch die erfindungsgemäße Vorrichtung erzeugt wird, oder im Unterdruck durchzuführen. Besonders bevorzugt erfolgt die Reaktion unter dem Druck, der durch die Schwerkraft der Flüssigkeitssäule der Polymerisationsmischung oder durch die die Reaktionskomponenten eindosierenden Pumpen erzeugt wird.

Geträgerte und ungeträgerte Katalysatoren können in üblichen organischen Lösungsmitteln, wie in cyclischen oder alicyclischen Kohlenwasserstoffen, beispielsweise in den verschiedenen Isomeren von Butan, Pentan, Hexan und Heptan sowie Cyclobutan, -pentan, -hexan und -heptan oder in aromatischen Lösungsmitteln, beispielsweise Benzol, Toluol, Ethylbenzol und Xylol, oder in sauerstoffhaltigen Lösungsmitteln, beispielsweise Tetrahydrofuran, in halogenierten Lösungsmitteln, beispielsweise Dichlormethan, in stickstoffhaltigen Lösungsmitteln, beispielsweise N-Methylpiperidin etc., vorgelegt werden, wobei Toluol und Ethylbenzol bevorzugt und Ethylbenzol besonders bevorzugt ist. Im erfindungsgemäßen Verfahren können ebenfalls die Mischungen der obigen Lösungsmittel eingesetzt werden.

Das Reaktionsgemisch aus Monomeren, Katalysator und Co-Katalysator wird durch das erfindungsgemäße Vormischen aktiviert. Vorzugsweise erfolgt das Vormischen bei einer Temperatur, bei der die Reaktionsmischung noch flüssig ist und die Polymerisation nicht einsetzt. In Abhängigkeit der für die Reaktionsmischung verwendeten Komponenten liegt diese Temperatur in einem Bereich von -30 bis + 140, bevorzugt von 0 bis 70 und besonders bevorzugt von 15 bis 30 °C. Weiterhin ist bei der erfindungsgemäßen Aktivierung die Vormischung vorzugsweise so durchzuführen, daß die Verweilzeit und die Temperatur so gewählt ist, daß neben dem Einsetzen der Polymerisationsreaktion auch eine Schädigung des Katalysators trotz einer für die Aktivierung ausreichender Durchmischung ausbleibt.

Die Aktivierung durch Vorvermischung der Reaktionsmischung erfolgt vorteilhafterweise zeitlich kurz oder unmittelbar vor der Polymerisationsreaktion. Der Zeitraum zwischen Aktivierung durch Vormischung und Polymerisation beträgt 0 bis 60, bevorzugt 0,01 bis 45 und besonders bevorzugt 0,1 bis 30 min, wobei es bevorzugt ist, daß die Vorvermischung im wesentlichen ohne daß eine Reaktion einsetzt erfolgt.

Das erfindungsgemäße Verfahren wird vorteilhafterweise lösungsmittelfrei durchgeführt. In einer besonders bevorzugten Ausführungsform des erfindungsgemäßen Verfahrens wirken die eingesetzten Monomere anfänglich als Lösungsmittel. Zudem ist es vorteilhaft, das erfindungsgemäße Verfahren in einer Inertgasatmosphäre, beispielsweise aus Stickstoff oder Argon, möglichst unter Ausschluß von Feuchtigkeit durchzuführen.

Im erfindungsgemäßen Verfahren verläuft die Vorvermischung vorzugsweise, ohne daß eine Reaktion erfolgt. Weiterhin ist es erfindungsgemäß vorteilhaft, daß die Polymerisate so anfallen, daß sie im wesentlichen unmittelbar nach der Polymerisation weiterverarbeitet, vorzugsweise extrudiert werden können. Dieses ist vorzugsweise der Fall, wenn die Polymerisation im erfindungsgemäßen Verfahren zu hohen Ausbeuten getrieben wird und demgemäß das Polymerisat einen geringen Restmonomergehalt besitzt. Dieser Restmonomergehalt liegt unter 10, bevorzugt unter 5 und besonders bevorzugt unter 3 Gew.-%, bezogen auf das Gewicht des Polymerisats. Der im Polymerisat noch verbliebene Restmonomergehalt kann beispielsweise durch Abdampfen oder durch Anlegen eines Vakuums entfernt werden. Vorzugsweise erfolgt das erfindungsgemäße Verfahren in einem Misch-Knet-Reaktor mit daran anschließendem Extruder, ohne daß weitere Aufarbeitungsschritte, beispielsweise das Abdestillieren von größeren Restmonomermengen, die insbesondere bei geringen Umsätzen anfallen, erfolgen muß. Damit erlaubt das erfindungsgemäße Verfahren eine Weiterverarbeitung des Polymerisats im wesentlichen unmittelbar nach dessen Herstellung.

Das erfindungsgemäße Verfahren wird beispielsweise in einer Vorrichtung durchgeführt, die sich im wesentlichen wie folgt aufbaut:

Ein Reservoir 1 für die flüssige Mischung aus Monomer und Co-Katalysator ist über eine Dosiereinrichtung 2 sowie ein Katalysator enthaltendes Reservoir 3 über eine Dosiereinrichtung 4 mit einem Polymerisationsreaktor 6 verbunden, wobei sich dazwischen eine mit Dosiereinrichtung und Polymerisationsreaktor verbundene Mischvorrichtung 5 befindet.

In einer bevorzugten Ausführungsform der erfindungsgemäßen Vorrichtung schließt sich im wesentlichen unmittelbar an einem Misch-Knet-Reaktor eine Austrageinrichtung oder ein Extruder an. Diese Anordnung ist insbesondere deshalb vorteilhaft, weil sie der Tatsache, daß im erfindungsgemäßen Verfahren anfallende Polymerisate nur einen geringen Restmonomergehalt aufweisen, Rechnung trägt und eine sofortige Weiterverarbeitung oder Konfektionierung des Polymerisats erlaubt.

Erfindungsgemäß bevorzugte Reservoirs 1 sind gegenüber der Mischung aus Monomer und Co-Katalysator inert. Als Reservoirs kommen beispielsweise Behälter aus Edelstahl, insbesondere V2A- oder V4A-Stahl, in Frage. Bevorzugte inerte Behältnisse für die Mischung aus Monomer und Co-Katalysator besitzen eine Glas- üder Keramikoberfläche. Es ist gleichfalls möglich, einen gegenüber der Mischung aus Monomer und Co-Katalysator inerten Kunststoffbehälter als Reservoir 1 zu verwenden.

Erfindungsgemäß geeignete Dosiereinrichtungen 2 sind beispielsweise Pumpen, insbesondere Hubkolbenpumpen und Zahnradpumpen, wobei eine Zahnradpumpe bei kontinuierlichem Betrieb besonders bevorzugt ist.

Als erfindungsgemäße Reservoirs 3 für den Katalysator kommen Behälter in Frage, die gegenüber dem Katalysator inert sind. Grundsätzlich sind die für Reservoir 1 verwendeten Behältnisse ebenfalls für Reservoir 3 geeignet, wobei Behältnisse mit Glas- oder Keramikoberfläche besonders bevorzugt sind.

Der Katalysator, bevorzugt die Metallocen-Katalysatorlösungen, lassen sich mit der erfindungsgemäßen Dosiereinrichtung 4, die beispielsweise eine Pumpe, bevorzugt eine Hubkolben- oder Zahnradpumpe und bei kontinuierlichem Betrieb besonders bevorzugt eine Hubkolbenpumpe ist, dosieren. Das Reservoir 1 und die Dosiereinrichtung 2 sowie das Reservoir 3 und die Dosiereinrichtung 4 können direkt hintereinander angeordnet oder vorzugsweise mit einer Mischvorrichtung 5 direkt verbunden sein.

Geeignete Rohrleitungssysteme müssen gegenüber der Polymerisationsmischung oder deren Komponenten inert sein. Solche Rohrleitungssysteme bestehen beispielsweise aus Kunststoff, Edelstahl, insbesondere V2A- oder V4A-Stahl oder besitzen eine Glas- oder Keramikoberfläche.

Erfindungsgemäß kommen als Mischvorrichtungen Mischer, bevorzugt statische Mischer, in Frage. Die erfindungsgemäße Mischvorrichtung ist vorzugsweise mit einem Heiz-/Kühlmantel umgeben, um die Mischvorrichtung auf eine für die Aktivierung durch Vormischung geeignete Temperatur zu halten.

An die Mischvorrichtung 5 schließt sich ein Reaktor 6 an. Vorzugsweise schließt sich der Reaktor 6 direkt an die Mischvorrichtung 5 an. Der Reaktor sollte so ausgelegt sein, daß die Verweilzeit bei einem kontinuierlichen Betrieb von 10 min bis 5 h beträgt. Weiterhin ist es vorteilhaft, den Reaktor 6 mit einem Heiz-/Kühlmantel 7 zu versehen. Alle dem Fachmann geeignet erscheinenden Reaktoren können eingesetzt werden, wobei ein Misch- und Knetreaktor bevorzugt und ein zweiteiliger Misch- und Knetreaktor besonders bevorzugt ist. Misch- und Knetwerk sind zwei oder mehr selbstreinigende, parallel angeordnete Wellenpaare. An den Reaktor 6 schließt sich eine Austrageinrichtung 8 an. Beispiele für die erfindungsgemäße Austrageinrichtung 8 sind beispielsweise Förderbänder oder Förderschnecken, wobei eine Austragsdoppelschnecke und insbesondere eine gleichsinnig drehende Austragsdoppelschnecke besonders bevorzugt sind.

Das erfindungsgemäße Verfahren kann gleichfalls in einer Vorrichtung mit drei Reservoirs durchgeführt werden, wobei in einem Reservoir sich das Monomer oder die Monomermischung befindet, das zweite Reservoir den Katalysator und das dritte Reservoir den Co-Katalysator enthält. Die drei Reservoirs sind gleichfalls durch entsprechende Dosiereinrichtungen mit dem Vormischer verbunden. Die in den drei Reservoirs enthaltenen Komponenten der Polymerisationsmischung können entweder vor oder in dem Vormischer vereinigt werden. Dieses gilt auch für den Fall, in dem nur zwei Reservoirs verwendet werden.

In einer bevorzugten Ausführungsform der erfindungsgemäßen Vorrichtung wird eine flüssige Mischung aus Monomer, bevorzugt Styrol, und Methylaluminoxan aus dem Reservoir 1 vorzugsweise kontinuierlich durch eine Zahnradpumpe 2 dosiert und mit der gleichfalls über eine Hubkolbenpumpe 4 kontinuierlich dosierten Metallocen-Katalysatorlösung, bevorzugt eine Toluollösung von Pentamethylcyclopentadienyltitantrichlorid, Pentamethylcyclopentadienyltitantrimethylat und besonders bevorzugt Pentamethylcyclopentadienyltitantrimethyl, kontinuierlich bei einer Temperatur von 15 bis 25 °C in einem statischen Mischer 5 vermischt.

Die Reaktionskomponenten werden durch die Vorvermischung aktiviert. Anschließend wird die Mischung kontinuierlich dem Reaktor 6 zudosiert. Nach einer Verweilzeit von 10 min bis 3 h, bevorzugt 15 bis 60 min und besonders bevorzugt 20 bis 45 min in dem kontinuierlich betriebenen Misch- und Knetreaktor 6 wird durch eine Schnecke 8 ein im wesentlichen Styrol enthaltendes Polymer 9 als Feststoffpartikel (Pulver) ausgetragen.

Das durch das erfindungsgemäße Verfahren unter Einsatz der erfindungsgemäßen Vorrichtung erhaltene Polymer besitzt einen hohen Schmelzpunkt von mindestens 270 °C. Die thermischen und strukturellen Merkmale des überwiegend syndiotaktischen Polystyrols führen zu hervorragenden mechanischen Eigenschaften bei höheren Temperaturen, selbst oberhalb der Glastemperatur. Das syndiotaktische Polystyrol besitzt weiterhin eine hohe Chemikalienbeständigkeit, Steifigkeit und Zugfestigkeit sowie gute Dimensionsstabilität und hervorragende dielektrische Eigenschaften.

Das erfindungsgemäße Verfahren und die erfindungsgemäße Vorrichtung führen zu einer gleichzeitigen Steigerung des Umsatzes, des Molekulargewichts sowie der Syndiotaktizität und Teilkristallinität des Polymers. Weiterhin erlauben sie es, mit geringeren Katalysatormengen auszukommen, da das Risiko der Katalysatorbeschädigung vor allem durch die Vormischung und die thermische Belastung des Katalysators verringert wird. Ferner erlaubt das Verfahren einen einfachen Aufbau der Vorrichtung; so ist eine einstufige Dosierung zur Durchführung des erfindungsgemäßen Verfahrens ausreichend.

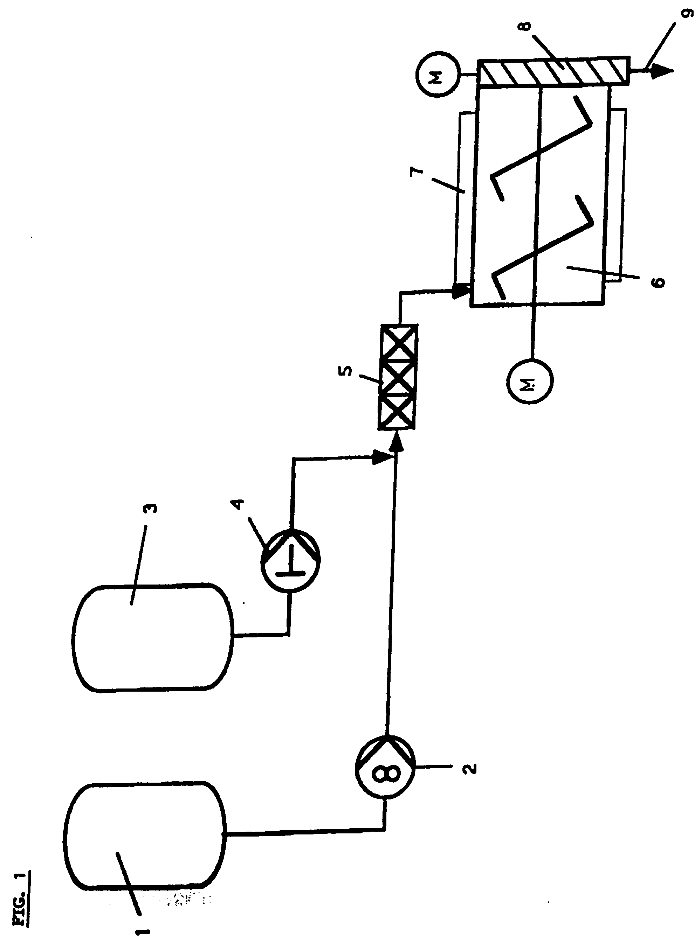

Fig. 1 ist eine schematische Zeichnung eines Beispiels einer erfindungsgemäßen Vorrichtung.

Die Erfindung wird anhand der folgenden Beispiele verdeutlicht:

### BEISPIELE

### Beispiel 1 (Vergleichsbeispiel)

12,0 kg Styrol (115,2 mol) werden mit 1,642 kg Methylaluminoxan (2,881 mol) der Fa. Witco GmbH, Bergkamen, und 1,427 kg Triisobutylaluminium (1,440 mol) der Fa. Witco GmbH, Bergkamen, unter Inertgas (Stickstoff) gemischt und mit einer Zahnrad-Dosierpumpe der Fa. Feinprüf in einen kontinuierlich betriebenen Misch- und Knetreaktor Typ AP12 Conti der Fa. List mit einem Reaktionsvolumen von insgesamt 22,8 1 dosiert. Parallel zur Zudosierung der Reaktionsmischung wurde ebenfalls auf den ersten Apparateblock 2,1912 g (0,0096 mol) des Katalysators (Pentamethylcyclopentadienyl)trimethyltitan [Cp^{∗}TiMe₃] gelöst in 1,2 Liter Toluol mit einer LEWA-Kolbenpumpe der Fa. M3 mit einer Menge von 100 ml Katalysatorlösung/ Stunde zudosiert.

| Polymerisationsgrößen: | |
|---|---|
| Umsatz | 39% |
| Syndiotaktizität | 98,2% |
| Mw | 121.000 |

### Beispiel 2

12,0 kg Styrol (115,2 mol) werden mit 821 g Methylaluminoxan (1,44 mol) "Eurecen" der Fa. Witco GmbH, Bergkamen, und 238 g Triisobutylaluminium (0,24 mol) der Fa. Witco GmbH, Bergkamen, unter Inertgas (Stickstoff) gemischt. Die flüssige Mischung aus Styrol und Methylaluminoxan wird mit einem Durchsatz von 7,5 l/h kontinuierlich durch eine Zahnradpumpe der Fa. Feinprüf dosiert und mit dem ebenfalls kontinuierlich dosierten Metallocen-Katalysator (Pentamethylcyclopentadienyl)trimethyltitan [Cp^{∗}TiMe₃] von 1,096 g (0,0048007 mol) gelöst in 1,2 Liter Toluol bei einer Dosiermenge von 0,5 l/h mit einer Hubkolbenpumpe M3 der Fa. Lewa, in einem statischen Mischer, Typ SMX der Fa. Sulzer, kontinuierlich bei einer Temperatur von 20 °C vermischt.

Die voraktivierte Reaktionsmischung wird nach Durchtritt durch den statischen Mischer in einen kontinuierlich betriebenen Misch- und Knetreaktor Typ AP12 Conti der Fa. List mit einem Reaktionsvolumen von insgesamt 22,8 l dosiert. Der gegensinnig drehende Misch- und Knetreaktor hat zwei parallel ineinandergreifende Rührwellen, die mit einer Drehzahl von 24 UpM (Putzwelle) und 6 UpM (Hauptwelle) rotieren. Der Außenmantel und die Wellen des Reaktors sind auf 75 °C temperiert.

Die mittlere Verweilzeit der Reaktionsmischung im Reaktor beträgt 52 Minuten, das pulverförmige Reaktionsprodukt, syndiotaktisches Polystyrol, wird über eine gleichsinnig drehende Austragsdoppelschnecke Typ ADS 54 kontinuierlich aus dem Reaktorraum ausgetragen.

| Polymerisationsgrößen: | |
|---|---|
| Umsatz | 92% |
| Syndiotaktizität | 99,1% |
| Mw | 130.600 |

### Beispiel 3

12,0 kg Styrol (115,2 mol) werden mit 821 g Methylaluminoxan (1,44 mol) "Eurecen" der Fa. Witco GmbH, Bergkamen, und 119 g Triisobutylaluminium (0,12 mol) der Fa. Witco GmbH, Bergkamen, unter Inertgas (Stickstoff) gemischt. Die flüssige Mischung aus Styrol und Methylaluminoxan wird mit einem Durchsatz von 7,5 l/h kontinuierlich durch eine Zahnradpumpe der Fa. Feinprüf dosiert und mit dem ebenfalls kontinuierlich dosierten Metallocen-Katalysator (Pentamethylcyclopentadienyl)trimethyltitan [Cp^{∗}TiMe₃] von 1,096 g (0,0048007 mol) gelöst in 1,2 Liter Toluol bei einer Dosiermenge von 0,5 l/h mit einer Hubkolbenpumpe M3 der Fa. Lewa, in einem statischen Mischer, Typ SMX der Fa. Sulzer, kontinuierlich bei einer Temperatur von 20 °C vermischt.

Die voraktivierte Reaktionsmischung wird nach Durchtritt durch den statischen Mischer in einen kontinuierlich betriebenen Misch- und Knetreaktor Typ AP12 Conti der Fa. List mit einem Reaktionsvolumen von insgesamt 22,8 l dosiert. Der gegensinnig drehende Misch- und Knetreaktor hat zwei parallel ineinandergreifende Rührwellen, die mit einer Drehzahl von 24 UpM (Putzwelle) und 6 UpM (Hauptwelle) rotieren. Der Außenmantel und die Wellen des Reaktors sind auf 75 °C temperiert.

Die mittlere Verweilzeit der Reaktionsmischung im Reaktor beträgt 52 Minuten, das pulverförmige Reaktionsprodukt, syndiotaktisches Polystyrol, wird über eine gleichsinnig drehende Austragsdoppelschnecke Typ ADS 54 kontinuierlich aus dem Reaktorraum ausgetragen.

| Polymerisationsgrößen: | |
|---|---|
| Umsatz | 71% |
| Syndiotaktizität | 99,5% |
| Mw | 189.900 |

### Beispiel 4

12,0 kg Styrol (115,2 mol) und 12 g Divinylbenzol (0,092 mol) (m-/p-Gemisch) werden mit 1,642 kg Methylaluminoxan (2,881 mol) der Fa. Witco GmbH, Bergkamen, und 1,427 kg Triisobutylaluminium (1,440 mol) der Fa. Witco GmbH, Bergkamen, unter Inertgas (Stickstoff) gemischt. Die flüssige Mischung aus Styrol und Methylaluminoxan wird mit einem Durchsatz von 7,5 l/h kontinuierlich durch eine Zahnradpumpe der Fa. Feinprüf dosiert und mit dem ebenfalls kontinuierlich dosierten Metallocen-Katalysator (Pentamethylcyclopentadienyl)trimethyltitan [Cp^{∗}TiMe₃] von 1,096 g (0,0048007 mol) gelöst in 1,2 Liter Toluol bei einer Dosiermenge von 0,5 l/h mit einer Hubkolbenpumpe M3 der Fa. Lewa, in einem statischen Mischer, Typ SMX der Fa. Sulzer, kontinuierlich bei einer Temperatur von 20 °C vermischt.

Die voraktivierte Reaktionsmischung wird nach Durchtritt durch den statischen Mischer in einen kontinuierlich betriebenen Misch- und Knetreaktor Typ AP12 Conti der Fa. List mit einem Reaktionsvolumen von insgesamt 22,8 l dosiert. Der gegensinnig drehende Misch- und Knetreaktor hat zwei parallel ineinandergreifende Rührwellen, die mit einer Drehzahl von 24 UpM (Putzwelle) und 6 UpM (Hauptwelle) rotieren. Der Außenmantel und die Wellen des Reaktors sind auf 75 °C temperiert.

Die mittlere Verweilzeit der Reaktionsmischung im Reaktor beträgt 52 Minuten, das pulverförmige Reaktionsprodukt, syndiotaktisches Polystyrol, wird über eine gleichsinnig drehende Austragsdoppelschnecke Typ ADS 54 kontinuierlich aus dem Reaktorraum ausgetragen.

| Polymerisationsgrößen: | |
|---|---|
| Umsatz | 88% |
| Syndiotaktizität | 99,5% |
| Mw | 1.201.300 |

### ANALYTIK

**1. Kristallinität**
   Die sPS-Proben wurden röntgenographisch auf ihren Kristallisationszustand untersucht. Nach der Polymerisation lagen die Proben in der γ-Modifikation vor und zeigten eine Kristallinität von ca. 30 - 35%. Nach dem Aufschmelzen der sPS-Proben und dem nachfolgenden langsamen Abkühlen (5 C°/min) zeigten die Proben die β-Modifikation, wobei die Kristallinität ca. 50 - 55% betrug. Die Röntgenweitwinkeldiagramme zur Charakterisierung des Kristallisationszustands wurden in Transmission in einem mit Primärchromator und ortsempfindlichem Detektor ausgerüsteten Diffraktometer der Fa. Siemens (Typ D 500 HS) aufgenommen.
**2. Molekulargewicht**
   Die Molekulargewichte wurden durch Hochtemperatur-GPC in 1,2,4-Trichlorbenzol bei 140 °C bestimmt. Es wurde dazu ein Gerät der Fa. Waters (Waters 150 C) verwendet. Als Säulenmaterial wurde vernetztes Divinylbenzol eingesetzt: Shodex Säulen.
**3. Taktizität**
   Die syndiotaktische Anordnung der aromatischen Liganden wurde durch ¹H-, ¹³C-NMR-Spektrometrie auf einem 500 MHz-Gerät der Firma Varian (Varian VXR 500) bestimmt.

## Patentansprüche

1. Verfahren zur Herstellung von im wesentlichen syndiotaktischen und teilkristallinen Polymerisaten, die vinylaromatische Monomere beinhalten, aus einer Reaktionsmischung enthaltend als Komponente vinylaromatische Verbindungen, Metallocen-Komplexe als Katalysatoren und einen oder mehrere Co-Katalysatoren ausgewählt aus der Gruppe der starken, neutralen Lewis-Säuren, der ionischen Verbindungen mit lewissauren Kationen und der ionischen Verbindungen mit Brönsted-Säuren als Kationen, **dadurch gekennzeichnet, daß** die Komponenten vor dem Eintritt in einen Polymerisationsreaktor vorvermischt werden.

2. Verfahren nach Anspruch 1, dadurch gekennzeichnet, daß die Vorvermischung im wesentlichen ohne daß eine Reaktion einsetzt erfolgt.

3. Verfahren nach Anspruch 1 oder 2, dadurch gekennzeichnet, daß als vinylaromatische Verbindungen der allgemeinen Formel (I), 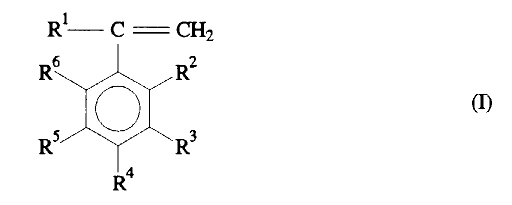 worin
R¹ Wasserstoff oder C₁- bis C₄-Alkyl bedeutet,
R² bis R⁶ unabhängig voneinander Wasserstoff, C₁- bis C₁₂-Alkyl, C₆- bis C₁₈-Aryl oder Halogen bedeuten oder zwei benachbarte Reste gemeinsam eine 4 bis 15 Kohlenstoffatome aufweisende cyclische Gruppe bilden,
eingesetzt werden.

4. Verfahren nach einem der Ansprüche 1 bis 2, dadurch gekennzeichnet, daß die Vorvermischung der Komponenten unmittelbar vor der Polymerisationsreaktion über einen Zeitraum von 0,01 s bis 2 h in einem Temperatur- und Druckbereich, in dem die Reaktionsmischung flüssig vorliegt und noch nicht reagiert, erfolgt.

5. Verfahren nach einem der Ansprüche 1 bis 4, dadurch gekennzeichnet, daß eine Polymerisation der vinylaromatischen Verbindungen in einem Misch-Knet-Reaktor mit daran anschließendem Extruder erfolgt.

6. Verfahren nach einem der Ansprüche 1 bis 5, dadurch gekennzeichnet, daß die Polymerisate im wesentlichen unmittelbar nach der Polymerisation extrudiert werden.

7. Vorrichtung, enthaltend ein Reservoir (1) für eine Mischung aus Monomer und Co-Katalysator, ein Reservoir (3) für einen Metallocen-Katalysator, die jeweils über Dosiereinrichtungen (2) und (4) mit einem Polymerisationsreaktor (6) verbunden sind, dadurch gekennzeichnet, daß sich zwischen dem Polymerisationsreaktor (6) und den Dosiereinrichtungen (2) und (4) eine mit Dosiereinrichtung und Polymerisationsreaktor verbundene Mischvorrichtung (5) befindet.

8. Vorrichtung nach Anspruch 7, dadurch gekennzeichnet, daß die Mischvorrichtung (5) unmittelbar vor dem Reaktor (6) angeordnet ist.

9. Vorrichtung nach Anspruch 7 oder 8, dadurch gekennzeichnet, daß sich an den Misch-Knet-Reaktor im wesentlichen unmittelbar eine Austragsvorrichtung oder ein Extruder anschließt.

10. Verwendung der nach einem der Ansprüche 1 bis 5 hergestellten Polymerisate für Folien, Fasern, Beschichtungen und Formkörper.

## Claims

1. A process for the preparation of essentially syndiotactic and semicrystalline polymers which comprise vinylaromatic monomers from a reaction mixture containing, as component, vinylaromatic compounds, metallocene complexes as catalysts and one or more cocatalysts selected from the group consisting of the strong, neutral Lewis acids, the ionic compounds having Lewis acid cations and the ionic compounds having Brönsted acids as cations, wherein the components are premixed before entering a polymerization reactor.

2. A process as claimed in claim 1, wherein the premixing is carried out essentially without a reaction starting.

3. A process as claimed in claim 1 or 2, wherein the vinylaromatic compounds used are those of the formula (I) 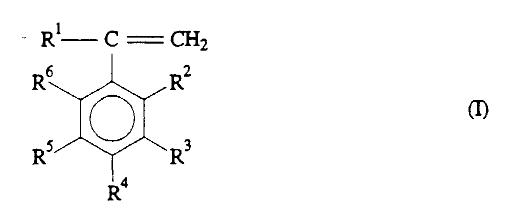 where
R¹ is hydrogen or C₁-C₄-alkyl and
R² to R⁶, independently of one another, are each hydrogen, C₁-C₁₂-alkyl, C₆-C₁₈-aryl or halogen or two adjacent radicals together form a cyclic group of 4 to 15 carbon atoms.

4. A process as claimed in either of claims 1 to 2, wherein the premixing of the components is carried out immediately before the polymerization reaction over a period of from 0.01 seconds to 2 hours in a temperature and pressure range in which the reaction mixture is present in liquid form and still does not react.

5. A process as claimed in any of claims 1 to 4, wherein a polymerization of the vinylaromatic compounds is carried out in a mixing/kneading reactor with a downstream extruder.

6. A process as claimed in any of claims 1 to 5, wherein the polymers are extruded essentially immediately after the polymerization.

7. Apparatus containing a reservoir (1) for a mixture of monomer and cocatalyst and a reservoir (3) for a metallocene catalyst, which are connected via metering means (2) and (4) to a polymerization reactor (6), wherein a mixing apparatus (5) which is connected to the metering means and the polymerization reactor is present between the polymerization reactor (6) and the metering means (2) and (4).

8. Apparatus as claimed in claim 7, wherein the mixing apparatus (5) is arranged directly before the reactor (6).

9. Apparatus as claimed in claim 7 or 8, wherein a discharge apparatus or an extruder is essentially directly downstream of the mixing/kneading reactor.

10. The use of a polymer prepared as claimed in any of claims 1 to 5 for films, fibers, coatings and moldings.

## Revendications

1. Procédé de préparation de polymères sensiblement syndiotactiques et partiellement cristallins, qui contiennent des monomères vinylaromatiques, à partir d'un mélange réactionnel comportant, comme composants, des composés vinylaromatiques, des complexes de métallocène comme catalyseurs et un ou plusieurs cocatalyseurs choisis parmi le groupe des acides de Lewis forts, neutres, des composés ioniques à cations d'acide de Lewis et des composés ioniques avec des acides de Brönsted comme cations, caractérisé en ce que les composants sont prémélangés avant l'entrée dans un réacteur de polymérisation.

2. Procédé suivant la revendication 1, caractérisé en ce que le prémélange est effectué sensiblement sans qu'une réaction ne se déclenche.

3. Procédé suivant l'une des revendications 1 et 2, caractérisé en ce que, comme composés vinylaromatiques, on met en oeuvre ceux de la formule générale (I) : 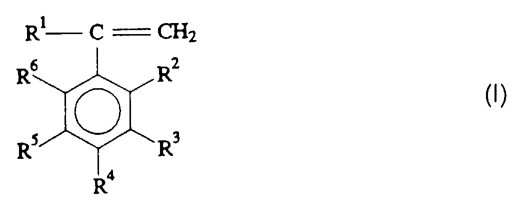 dans laquelle
R¹ représente de l'hydrogène ou un groupe alkyle en C₁-C₄,
R² à R⁶ représentent indépendamment l'un de l'autre de l'hydrogène, un groupe alkyle en C₁-C₁₂, un groupe aryle en C₆-C₁₈ ou de l'halogène, deux radicaux voisins pouvant former conjointement un groupe cyclique présentant 4 à 15 atomes de carbone.

4. Procédé suivant l'une des revendications 1 et 2, caractérisé en ce que le prémélange des composants a lieu immédiatement avant la réaction de polymérisation sur un intervalle de temps de 0,01 s à 2 h dans une gamme de températures et de pressions où le mélange réactionnel se présente à l'état liquide et ne réagit pas encore.

5. Procédé suivant l'une des revendications 1 à 4, caractérisé en ce qu'une polymérisation des composés vinylaromatiques a lieu dans un réacteur de malaxage-pétrissage avec une extrudeuse raccordée à celui-ci.

6. Procédé suivant l'une des revendications 1 à 5, caractérisé en ce que les polymères sont extrudés sensiblement immédiatement après la polymérisation.

7. Dispositif, comportant un réservoir (1) pour un mélange de monomère et de cocatalyseur, un réservoir (3) pour un catalyseur à base de métallocène, qui chacun sont reliés par l'intermédiaire de dispositifs de dosage (2) et (4) à un réacteur de polymérisation, caractérisé en ce qu'un dispositif de mélange (5) relié au dispositif de dosage et au réacteur de polymérisation se trouve entre le réacteur de polymérisation (6) et les dispositifs de dosage (2) et (4).

8. Dispositif suivant la revendication 7, caractérisé en ce que le dispositif de mélange (5) est agencé immédiatement en amont du réacteur (6).

9. Dispositif suivant l'une des revendications 7 et 8, caractérisé en ce qu'un dispositif d'évacuation ou une extrudeuse se raccorde sensiblement directement au réacteur de malaxage-pétrissage.

10. Utilisation des polymères préparés suivant l'une des revendications 1 à 5, pour former des feuilles, des fibres, des revêtements et des corps façonnés.
